# EUROPÄISCHE PATENTANMELDUNG

(11) **EP 3 945 254 A1**
(43) Veröffentlichungstag der Anmeldung: **02.02.2022**
(21) Anmeldenummer: 21188469.7
(22) Anmeldetag: 29.07.2021
(51) Int. Cl.: F24F 3/16, F24F 8/22, B60H 1/00, F24F 110/50

(54) **VORRICHTUNG UND VERFAHREN ZUR LUFTENTKEIMUNG**

(30) Priorität: 29.07.2020 DE 102020119962
(71) Anmelder: LED3.0 GmbH, 41460 Neuss (DE)
(72) Erfinder: Elskamp, Dirk, 41472 Neuss (DE)
(74) Vertreter: Brinkmann & Partner

(57) **Zusammenfassung**

Die Erfindung betrifft eine Vorrichtung zur Luftentkeimung mittels UV-C Strahlung für die Anordnung in einem Belüftungssystem, insbesondere eines Gebäudes oder eines Fahrzeugs, aufweisend ein Gehäuse mit einem Strömungseinlass, einem Strömungsauslass sowie einem zwischen Strömungseinlass und -auslass verlaufenden Strömungskanal für die zu entkeimende Luft, und aufweisend wenigstens eine UV-C-LED.

Ferner betrifft die Erfindung ein Verfahren zur Luftentkeimung mittels UV-C Strahlung in einem Belüftungssystem, insbesondere eines Gebäudes, bei dem innerhalb des Belüftungssystems strömende Luft durch eine mit dem Belüftungssystem strömungstechnisch verbundene Vorrichtung zur Luftentkeimung gemäß der Erfindung geleitet wird, wobei die Luft in der Vorrichtung während der Durchströmung zumindest zeitweise mit UV-C Strahlung bestrahlt wird, welche von der wenigstens einen UV-C-LED emittiert wird.

## Beschreibung

Die Erfindung betrifft eine Vorrichtung zur Luftentkeimung mittels UV-C Strahlung für die Anordnung in einem Belüftungssystem, insbesondere eines Gebäudes oder eines Fahrzeugs. Ferner betrifft die Erfindung ein Verfahren zur Luftentkeimung mittels UV-C Strahlung in einem Lüftungssystem, insbesondere eines Gebäudes.

Entkeimung, insbesondere Oberflächenentkeimung, mittels UV-Strahlung ist dem Grunde nach aus dem Stand der Technik bekannt. Dieser Anwendung liegt die Erkenntnis zu Grunde, dass Keime, insbesondere Bakterien und Viren, empfindlich gegenüber UV-Strahlung sind.

Gleichwohl ist die Entkeimung von Luft in Belüftungssystemen, insbesondere von Gebäuden oder Fahrzeugen, mittels UV-Strahlung bislang nicht wirtschaftlich sinnvoll nutzbar. In solchen Belüftungssystemen wird Luft mit einem vergleichsweise großer Volumenstrom transportiert. Bisherige UV-Quellen müssen mit vergleichsweise viel Energie oder in vergleichsweise hoher Stückzahl betrieben werden, um die notwendige Strahlungsintensität zu erreichen. Beide Varianten sind aus wirtschaftlicher Sicht jedoch nicht interessant. Darüber hinaus sind gängige UV-Quellen, wie etwa Quecksilberdampflampen, Quarzlampen oder Schwarzlichtlampen wartungsintensiv und von vergleichsweise kurzer Lebensdauer.

Aus diesem Grund werden Belüftungssysteme - sofern überhaupt eine Entkeimung vorgesehen ist - üblicherweise mittels entsprechender Filtersysteme und/oder dem Einsatz von antibakteriellen und/oder antiviralen Desinfektionsmitteln entkeimt. Beide Lösungen sind aufwändig, teuer und hinsichtlich ihrer Wirksamkeit insgesamt wenig zufriedenstellend. Der Einsatz von antibakteriellen Desinfektionsmitteln fördert überdies die Entstehung multiresistenter Keime, die für Krankenhäuser und Pflegeheime zu einem immer größeren Problem werden.

Auch hat die jüngste COVID-19 Pandemie gezeigt, dass die bisher in Belüftungssystemen eingesetzten Mittel, insbesondere in öffentlichen Gebäuden, aber auch im Flug- und Zugverkehr nicht ausreichend sind, um die Verbreitung von Keimen, insbesondere des Virus SARS-CoV-2, zu erreichen.

Der Erfindung liegt damit die **Aufgabe** zugrunde, eine Vorrichtung und ein Verfahren anzugeben, welche die Entkeimung von Luft in Belüftungssystemen mittels UV-Strahlung ermöglicht und gegenüber bekannten Systemen eine erhöhte Wirksamkeit zu erreichen.

Zur **Lösung** der Aufgabe schlägt die Erfindung vorrichtungsseitig eine Vorrichtung zur Luftentkeimung mittels UV-C Strahlung für die Anordnung in einem Belüftungssystem, aufweisend ein Gehäuse mit einem Strömungseinlass, einem Strömungsauslass sowie einem zwischen Strömungseinlass und -auslass verlaufenden Strömungskanal für die zu entkeimende Luft, und aufweisend wenigstens eine UV-C-LED.

Die Erfindung macht sich zwei miteinander synergierende Effekte zunutze. Zum einen hat es sich ergeben, dass UV-C Strahlung gegenüber Keimen, insbesondere gegenüber Viren, besonders wirksam ist. Der Ausdruck "UV-C Strahlung" bezeichnet im Sinne der Erfindung elektromagnetische Strahlung im ultravioletten Wellenlängenbereich von 280 bis 100 nm. Zum anderen ist der Einsatz einer LED als UV-C Strahlungsquelle hinsichtlich Energieverbrauch und Leistungsfähigkeit besonders vorteilhaft. Darüber hinaus weist eine im Besonderen als UV-C-LED ausgebildete LED eine gegenüber anderen UV-Quellen hohe Lebensdauer auf und bedarf vergleichsweise wenig Wartung. Der Begriff "LED" bezeichnet im Sinne der Erfindung eine Leuchtdiode. Der Begriff "UV-C-LED" bezeichnet im Sinne der Erfindung eine Leuchtdiode, die im Besonderen für die Emission von ultravioletter Strahlung im Wellenlängenbereich von 280 bis 100 nm ausgebildet ist. Durch die erfindungsgemäße Ausgestaltung ist es nun erstmals möglich, eine Entkeimung von Luft innerhalb eines Belüftungssystems, insbesondere eines Belüftungssystems für Gebäude, einzusetzen. Hierdurch kann vorzugsweise und mit besonderem Vorteil in Gänze auf entsprechende Filtersysteme und/oder antibakterielle sowie antivirale Desinfektionsmittel verzichtet werden. Insbesondere die Handhabung, der Wartungsaufwand und die Benutzerfreundlichkeit eines solchen Belüftungssystems werden hierdurch verbessert. Darüber hinaus ist der Verzicht auf antibakterielle Desinfektionsmittel hinsichtlich der Bildung von multiresistenten Keimen von Vorteil.

Die erfindungsgemäße Vorrichtung ist dafür bestimmt, in Belüftungssysteme integriert zu werden. Entsprechende Belüftungssysteme sind dabei insbesondere solche, wie sie in Gebäuden oder auch in Fahrzeugen eingesetzt werden. je nach Größe des Belüftungssystems kann es vorgesehen sein, mehrere erfindungsgemäße Vorrichtungen in das Belüftungssystem zu integrieren. Dies wird insbesondere bei Belüftungssystemen für mehrstöckige Gebäude oder vergleichsweise große Fahrzeuge, wie Flugzeuge oder Züge, der Fall sein. Prinzipiell ist jedoch bereit eine einzige Vorrichtung ausreichend, um die Keimbelastung in einem Belüftungssystem auf einen unschädlichen Wert zu reduzieren. Es ist daher vorzugsweise vorgesehen, dass Gehäuse der Vorrichtung an das jeweilige Belüftungssystem anzupassen. Hierzu weist das Gehäuse vorzugsweise eine Breite, Höhe und/oder Länge von 10 cm bis 200 cm auf. Ferner weist der vom Gehäuse bereitgestellte Strömungskanal eine Querschnittsfläche von 10 cm² bis 200 cm² auf. Das Gehäuse ist hinsichtlich seines Materials an das Material des Belüftungssystems anpassbar. Insbesondere ist es zu diesem Zweck aus Kunststoff und/oder Metall, insbesondere Stahlblech, ausgebildet. Es ist ferner bevorzugt vorgesehen, dass das Gehäuse lufteinlassseitig und/oder luftauslassseitig Verbindungselemente, insbesondere in Form von Mitteln zur Verrastung und/oder Verschraubung, aufweist, die der strömungstechnischen Verbindung mit dem Belüftungssystem dienen. Hierdurch kann die erfindungsgemäße Vorrichtung in einfacher Weise in das Belüftungssystem integriert werden. Vorzugsweise ist die mit Belüftungssystem mittels der Verbindungselemente ausgebildete Verbindung gasdicht. Die Verbindungselemente verfügen zu diesem Zweck vorzugsweise über entsprechende Dichtmittel.

Das erfindungsgemäße Gehäuse kann mit rundem, vorzugsweise kreisförmigem, Querschnitt oder eckigem, vorzugsweise viereckigem, Querschnitt ausgebildet sein. Auch diese Querschnittsgeometrie ist vorzugsweise an die Querschnittsgeometrie der Rohre des Belüftungssystems anpassbar. In seiner Ausgestaltung mit viereckigem Querschnitt ist das Gehäuse insgesamt vorzugsweise quaderförmig ausgebildet. Das Gehäuse weist dabei vorzugsweise vier Seitenwände auf, welche zwischen sich den Strömungskanal ausbilden. Strömungseinlass und Strömungsauslass sind jeweils in einer der übrigen zwei Seitenwände ausgebildet. Ein- und Auslass können in gegenüberliegenden Seitenwänden oder in benachbarten Seitenwänden ausgebildet sein. Vorzugsweise sind ein-und Auslass in gegenüberliegenden Seitenwänden ausgebildet. Die den jeweiligen Ein-oder Auslass bereitstellenden Seitenwände können hierzu jeweils eine Öffnung bereitstellen. Alternativ kann die jeweilige Seite des Gehäuses zur Ausbildung eines Strömungseinlasses oder Strömungsauslasses vollständig offen ausgebildet sein.

Vorzugsweise ist die LED in Chipbauweise gefertigt. Sie verfügt dabei über eine Platine, auf welcher das hinsichtlich der Leuchtkraft wirksame Halbleiter-Bauelement angeordnet ist und die Leitungen verlaufen. Besonders bevorzugt ist die LED in SMD-Bauweise (surface mounted device) ausgebildet. Vorzugsweise weist der UV-C-LED-Chip dabei die Maße 3535 SMD oder 6060 SMD auf.

Gemäß einem bevorzugten Merkmal der Erfindung weist die UV-C-LED eine Leistung zwischen 35 mW und 1,5 W, vorzugsweise 500 mW bis 1,5 W, besonders bevorzugt 1 W bis 1,5 W auf.

Gemäß einem bevorzugten Merkmal der Erfindung weist die erfindungsgemäße Vorrichtung eine Vielzahl von UV-C-LEDs auf. Gemäß einer ersten Alternative sind die LEDs gleichmäßig innerhalb des Gehäuses verteilt angeordnet. Dies umfasst insbesondere die Anordnung von LEDs an jeder Seitenwand des Gehäuses, so dass die zu entkeimende Luft aus jeder Raumrichtung homogen bestrahlbar ist. Ferner bevorzugt sind die LEDs dabei über die gesamte Erstreckung des Gehäuses verteilt angeordnet. So wird sichergestellt, dass die zu entkeimende Luft während der gesamten Durchströmungsdauer durch das Gehäuse der Vorrichtung bestrahlbar ist. Gemäß einer zweiten Alternative sind die LEDs heterogen im Gehäuse angeordnet. Insbesondere ist vorgesehen, dass wenigstens ein Abschnitt des Gehäuses sämtliche LEDs aufnimmt. Vorzugsweise ist dies ein zwischen Strömungseinlass und Strömungsauslass verlaufender mittlerer Abschnitt des Gehäuses. Die Zusammenfassung der LEDs in einem oder mehreren räumlich voneinander getrennten Abschnitten hat zum einen steuerungstechnische Vorteile. Zum anderen können die nicht mit LEDs besetzten Abschnitte andere Funktionen, wie insbesondere der Sensorik, zugewiesen werden und entsprechende Mittel aufnehmen.

Gemäß einem weiteren bevorzugten Merkmal der Erfindung ist die LED mit einer Linse ausgerüstet, welche zumindest das Halbleiter-Bauelement abdeckt. Dies dient zum einen dem Schutz vor Fremdeinwirkung und zum anderen der Bündelung der zu emittierenden Strahlung. Die Linse der LED kann prinzipiell aus Kunststoff oder Glas gebildet sein. Hinsichtlich der bevorzugt vorgesehenen Bündelung der UV-Strahlung ist der Einsatz von Glas als Linsenmaterial bevorzugt. Dies deshalb, da Glas in der Regel bessere optische Eigenschaften aufweist. Darüber hinaus ist es bevorzugt vorgesehen, ein Glas mit einem vergleichsweise hohen Brechungsindex einzusetzen, um die Bündelung der Strahlung weiter zu präzisieren. Vorzugsweise wird ein Glas mit einem Brechungsindex von wenigstens 1,6 eingesetzt. Alternativ können eine Mehrzahl von benachbart zueinander angeordneter LEDs anstatt einer Einzellinse mit einem durchgehenden Reflektor ausgerüstet sein. Unabhängig davon, ob eine Einzellinse oder ein Reflektor eingesetzt wird, beträgt der Abstrahlwinkel der wenigstens einen LED vorzugsweise von 30° bis 120°.

Gemäß einem bevorzugten Merkmal der Erfindung ist die LED derart im Gehäuse angeordnet, dass deren Linse in Richtung des Strömungskanals ausgerichtet ist. Hierdurch wird sichergestellt, dass die emittierte UV-C-Strahlung in Wechselwirkung mit der den Strömungskanal durchströmenden Luft tritt. Zur weiteren Verbesserung der Wirksamkeit ist es vorgesehen, die emittierten Strahlen über die Linsenwirkung an sich hinaus zu bündeln. Hierzu weist die Linse der LED bevorzugt eine zusätzliche Einfräsung zur weiteren Bündelung der zu emittierenden UV-C-Strahlung auf. Hinsichtlich der bevorzugt einzubringenden Einfräsung ist der Einsatz von Glas als Linsenmaterial bevorzugt. Die Einfräsung kann dabei mit größerer Präzision in Glas eingebracht werden.

Gemäß einem bevorzugten Merkmal der Erfindung ist vorgesehen, dass die LED mittels der dem Halbleiter-Bauelement abgewandten Seite der Platine an einer der Seitenwände des Gehäuses angeordnet ist. Vorzugsweise ist die LED dabei an einer sich parallel zum Strömungskanal erstreckenden Seitenwand angeordnet. Hierdurch wird der Einstrahlungswinkel auf die zu entkeimende Luft seitens der LED verbessert.

Gemäß einem bevorzugten Merkmal der Erfindung ist wenigstens ein Kühlkörper zur Aufnahme der wenigstens einen UV-C-LED vorgesehen. Vorzugsweise ist die LED mit ihrer Platine auf dem Kühlkörper angeordnet. Hierdurch wird die Leistung der LED verbessert. Im Gegensatz zu gewöhnlichen Leuchtmitteln sinkt die Leistung einer LED bei steigender Temperatur. Es ist bevorzugt vorgesehen, dass eine Mehrzahl von LEDs auf dem wenigstens einen Kühlkörper angeordnet ist. Es kann darüber hinaus vorgesehen sein, eine Mehrzahl von Kühlkörpern aufweisend eine Mehrzahl von LEDs am Gehäuse anzuordnen.

Es kann dabei bevorzugt vorgesehen sein, dass der Kühlkörper unmittelbar mit der Gehäusewand verbunden ist. Zu diesem Zweck ist der Kühlkörper zwischen der gehäuseseitigen Oberfläche der Platine und der Seitenwand des Gehäuses angeordnet und verbindet beide miteinander. Durch die Kontaktierung des Gehäuses durch den Kühlkörper wird dessen Kühlleistung weiter verbessert, da thermische Energie mittels Wärmeleitung vom Kühlkörper an das Gehäuse übertragen wird. In dieser Hinsicht ist es von besonderem Vorteil, wenn das Gehäuse zumindest im Verbindungsbereich mit dem Kühlkörper aus einem wärmeleitenden Material, wie insbesondere aus einem Metall gebildet ist.

Alternativ kann wenigstens eine Gehäusewand wenigstens eine die Gehäusewand vollständig durchgreifende Ausnehmung aufweisen. Es ist vorzugsweise vorgesehen, dass der Kühlkörper in diese Ausnehmung wenigstens teilweise eingesetzt ist und eine dem Strömungskanal zugwandte Oberfläche bereitstellt. Auf dieser Oberfläche des Kühlkörpers, welche von einem Plattenelement bzw. Board des Kühlkörpers bereitgestellt sein kann, ist die wenigstens eine LED angeordnet. Diese Ausgestaltung hat hinsichtlich der Wärmeregulierung besondere Vorteile, da unter Umgehung der Seitenwand des Gehäuses eine Wärmeabfuhr erfolgt. Es ist dabei bevorzugt, dass der Kühlkörper einen Abschnitt zum Wärmetransfer aufweist, welcher sich außerhalb des Gehäuses befindet und im Wärmeaustausch mit der Umgebungsluft steht.

Gemäß einem bevorzugten Merkmal der Erfindung ist wenigstens ein Kühlkörper als Profil mit hoher Wärmeleitfähigkeit ausgebildet. Insbesondere ist er als Strangpressprofil ausgebildet. Strangpressprofile weisen durch Ihre vergleichsweise hohe Oberfläche eine besonders gute Wärmetransfer-Eigenschaften auf. Vorzugsweise ist das Strangpressprofil aus einem Metall, insbesondere aus Aluminium oder einer Aluminium-Legierung, gebildet.

Gemäß einem bevorzugten Merkmal der Erfindung ist vorgesehen, dass die Keimkonzentration in der zu entkeimenden Luft bestimmt, insbesondere gemessen, wird. In Abhängigkeit des Zeitpunkts und der Position der Messung kann die Keimkonzentration, insbesondere Bakterienkonzentration und/oder Viruskonzentration, in der zu entkeimenden Luft vor, nach und/oder während der Behandlung mit UV-C-Strahlung bestimmt werden. Zu diesem Zweck weist die Vorrichtung eine Messeinheit zur Messung von Keimkonzentrationen auf. Die Messeinheit kann vorzugsweise dazu ausgebildet sein, spektrographische Messungen der Luft vorzunehmen. Die Messeinheit ist vorzugsweise zumindest teilweise im Gehäuse angeordnet. Bevorzugt weist die Messeinheit über wenigstens einen Sensor auf. Der wenigstens eine Sensor kann dabei in Strömungsrichtung der zu entkeimenden Luft im Bereich des Strömungseinlasses, des Strömungsauslasses oder in einem dazwischenliegenden Abschnitt angeordnet sein. Auf diese Weise kann eine Anfangskonzentration vor der Bestrahlung, eine Restkonzentration nach der Bestrahlung oder eine Verlaufskonzentration während der Bestrahlung bestimmt werden. Sofern lediglich ein Sensor vorgesehen ist, ist dieser besonders bevorzugt im Bereich des Strömungsauslasses angeordnet, um sicherzustellen, dass die Keimkonzentration auf einen voreingestellten Wert reduziert wurde.

Vorzugsweise sind eine Mehrzahl von Sensoren vorgesehen, welche im Bereich des Strömungseinlasses, des Strömungsauslasses und in einem dazwischenliegenden Abschnitt angeordnet sind, um eine Anfangskonzentration vor der Bestrahlung, eine Restkonzentration nach der Bestrahlung oder eine Verlaufskonzentration während der Bestrahlung zu bestimmen.

Gemäß einem bevorzugten Merkmal der Erfindung sind Bestrahlungsparameter in Abhängigkeit der bestimmten Konzentrationen, insbesondere Anfangs-, Rest- und/oder Verlaufskonzentration, steuerbar und/oder regelbar. Bestrahlungsparameter sind insbesondere Bestrahlungsdauer, Strahlungsintensität und Bestrahlungsmodus, wie etwa Dauerbestrahlung oder Intervallbestrahlung. Vorrichtungsseitig ist die Messeinheit zu diesem Zweck mit einer Steuereinheit signaltechnisch verbunden. Die Steuereinheit Ihrerseits ist mit der oder den UV-C-LEDs steuerungstechnisch verbunden. Die Steuereinheit kann vorzugsweise Teil eines Regelkreises sein, bei dem ein vorgegebener Soll-Wert der Keimkonzentration mit einem seitens der Messeinheit bestimmten Ist-Wert verglichen und bei Über und/oder Unterschreiten des Soll-Werts durch den Ist-Wert die LED, insbesondere zur Steuerung der Bestrahlungsparameter, ansteuert.

Gemäß einem bevorzugten Merkmal der Erfindung weist die Vorrichtung zur Luftentkeimung Mittel zur Messung der Luftbelastung mit Kohlenstoffdioxid (CO₂) auf. Die Mittel sind insbesondere dazu ausgebildet, die CO₂-Konzentration und/oder den CO₂-Partialdruck der die Vorrichtung durchströmenden Luft zu bestimmen. Die Mittel können dabei gemäß einer ersten Ausführungsform in Form einer gesonderten weiteren Messeinheit mit gesonderten Sensoren ausgebildet sein. Gemäß einer zweiten Ausführungsform sind die Mittel zur Messung der Luftbelastung mit Kohlenstoffdioxid in die erste Messeinheit zur Messung von Keimkonzentrationen integriert. In dieser Ausgestaltung verfügt die erste Messeinheit neben dem wenigstens einen ersten Sensor zur Detektion von Keimen über wenigstens einen zweiten Sensor zur Detektion von CO₂. Die Mittel zur Messung der Luftbelastung mit Kohlenstoffdioxid dienen insbesondere der Bestimmung der Aerosole in einem Belüftungssystem. Es ist dabei vorzugsweise ein Ampelsystem vorgesehen, dass bei Über- oder Unterschreiten von festlegbaren CO₂-Grenzwerten einem Benutzer, beispielsweise in einer Schaltzentrale eines Gebäudes, die Ergebnisse bzw. die Höhe der CO₂ Belastung in dem Belüftungssystem in Form eines in den Farben grün / gelb / rot, visuell, insbesondere über entsprechende LEDs oder über eine digitale Anzeige dargestellt werden. Das Ampelsystem ist damit einerseits mit der ersten oder zweiten Messeinheit und andererseits mit einer Anzeigeneinheit datentechnisch verbunden. Die Anzeigeneinheit kann dabei mit entsprechend farbig ausgebildeten LEDs ausgerüstet sein und/oder ein digitales Display bereitstellen oder mit einem solchen datentechnisch verbunden sein.

Die Erfindung betrifft ferner ein System aufweisend ein Belüftungssystem, insbesondere eines Gebäudes oder eines Fahrzeugs, vorzugsweise eines Flugzeugs oder eines Zugs, und eine mit dem Belüftungssystem strömungstechnisch verbundene erfindungsgemäße Vorrichtung zur Luftentkeimung.

Zur **Lösung** der Aufgabe schlägt die Erfindung ferner verfahrensseitig ein Verfahren zur Luftentkeimung mittels UV-C Strahlung in einem Belüftungssystem, insbesondere eines Gebäudes oder eines Fahrzeugs, vor, bei dem innerhalb eines Belüftungssystems strömende Luft durch eine mit dem Belüftungssystem strömungstechnisch verbundene Vorrichtung zur Luftentkeimung gemäß der Erfindung geleitet wird, wobei die Luft in der Vorrichtung während der Durchströmung zumindest zeitweise mit UV-C Strahlung bestrahlt wird, welche von der wenigstens einen UV-C-LED emittiert wird.

Die Erfindung wird nachfolgend anhand eines Ausführungsbeispiels im Detail erläutert. Nachfolgende Darstellung dient lediglich der Verdeutlichung einer besonderen Ausgestaltung der Erfindung und für den Fachmann nicht dahingehend zu verstehen, dass andere erfindungsgemäße oder bevorzugte Merkmale der Erfindung mit dieser Ausführungsform inkompatibel seien. Dabei zeigen
- Fig.1: eine Vorrichtung gemäß der Erfindung in perspektivischer, schematischer Darstellung;
- Fig.2: ein erfindungsgemäßes LED-Modul aus Kühlkörper und LEDs in perspektivischer, schematischer Darstellung.

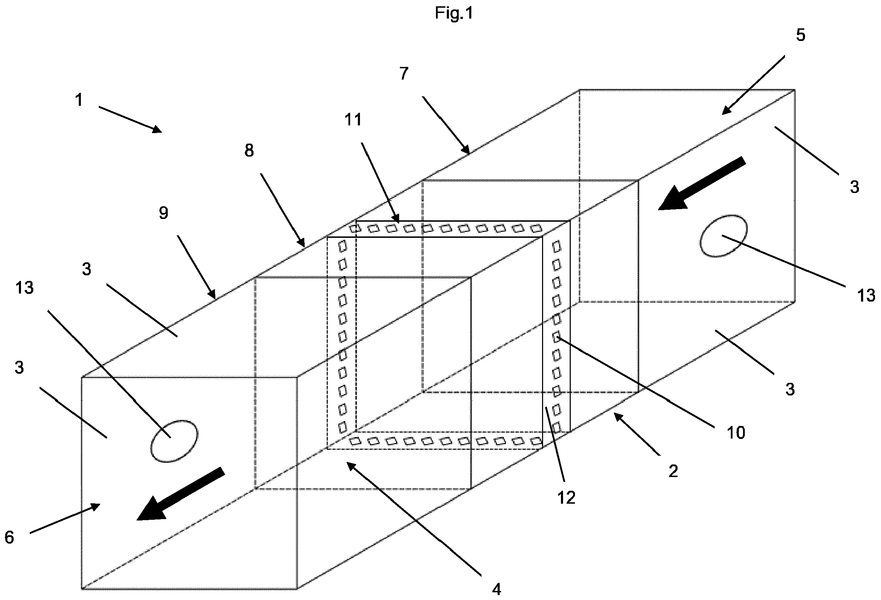

Figur 1 zeigt eine erfindungsgemäße Vorrichtung 1 mit einem Gehäuse 2. Das Gehäuse 2 weist Seitenwände 3 auf, welche einen Strömungskanal 4 zwischen sich definieren. In Längsrichtung des Gehäuses 2 wird der Strömungskanal 4 einendseitig von einem Strömungseinlass 5 und andernendseitig von einem Strömungsauslass 6 begrenzt.

Der Strömungskanal ist vorliegend in 3 Abschnitte 7, 8, 9 unterteilt. Abschnitt 7 erstreckt sich in Strömungsrichtung vom Strömungseinlass 5 bis zu einem mittleren Abschnitt 8. An den mittleren Abschnitt 8 schließt sich ein weiterer Abschnitt 9 an, welcher sich in Strömungsrichtung vom mittleren Abschnitt 8 bis zum Strömungsauslass 6 erstreckt.

Im mittleren Abschnitt 8 sind eine Vielzahl von UV-C-LEDs 10 angeordnet. Vorliegend sind die LEDs 10 an jeder der vier Seitenwände 3 des Gehäuses 2 angeordnet. Hierdurch wird die den mittleren Abschnitt 8 durchströmende Luft aus vier Raumrichtungen bestrahlt. Die Einwirkung auf die den mittleren Abschnitt 8 durchströmende Luft wird hierdurch optimiert.

Die LEDs 10 sind an jeder der vier Seitenwände 3 beabstandet zueinander in Form einer Reihe 11, insbesondere LED-Reihe, angeordnet. Ferner sind sämtliche LEDs in diesem Ausführungsbeispiel derart angeordnet, dass sie einen gemeinsamen in einer gemeinsamen Ebene liegen. Jede an einer Seitenwand 3 angeordnete LED-Reihe 11 bildet damit im Querschnitt betrachtet eine Seite eines gedachten Rechtecks. Auf diese Weise wird die Bildung von Strahlungslücken vermieden. Strahlungslücken sind Bereiche des Strömungskanals 4, welche bei Anordnung lediglich einer einzigen LED 10 aufgrund des maximalen Strahlungswinkels der LED 10 nicht abgedeckt wären. Durch die bevorzugte Art der Anordnung einer Mehrzahl von LEDs 10 auf jeder Seite des Gehäuses 2 wird dies verhindert.

Diese Art der Anordnung ist jedoch nicht zwingend erforderlich. Es kann ferner vorgesehen sein, dass eine oder mehrere Seitenwände 3 des Gehäuses 2 zwei oder mehrere LED-Reihen 11 aufweisen. Darüber hinaus können die LED-Reihen jeder Seitenwand 3 versetzt zu LED-Reihen anderer Seitenwände 3 positioniert sein, so dass diese zumindest nicht vollständig nicht in einer Ebene liegen. Darüber hinaus kann es alternativ vorgesehen sein, vollständig auf eine Anordnung in Reihen zu verzichten und stattdessen eine andere Art der Verteilung zu wählen. Insbesondere ist es möglich, einzelnen LEDs nach Auswertung von entsprechenden Sensordaten individuelle Positionen zuzuweisen, um je nach Bedarf die Strahlungsintensität an einer bestimmten Position im Strömungskanal zu verändern. Es kann darüber hinaus vorgesehen sein, dass über wenigstens eine gesamte Seitenwand 3 des mittleren Abschnitts 8 LEDs 10, insbesondere LED-Reihen 11, vollflächig verteilt angeordnet sind.

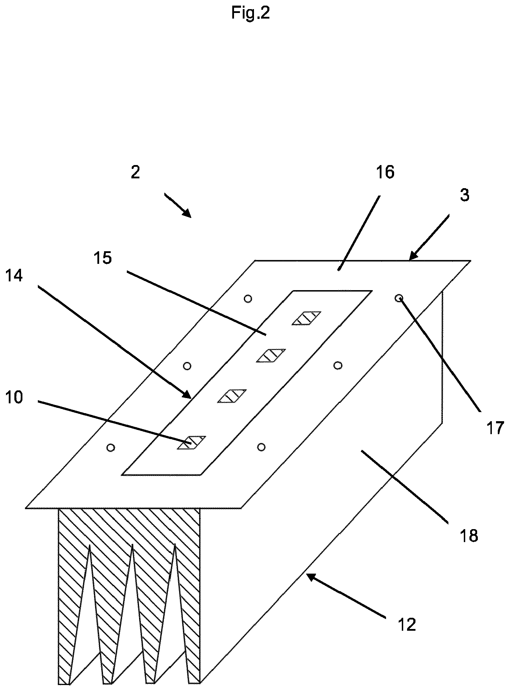

Die LEDs 10 sind gemäß dem vorliegenden Ausführungsbeispiel auf in Figur 2 im Detail dargestellten Kühlkörpern 12 angeordnet. Hierdurch wird die Leistung der LEDs verbessert.

In den strömungseinlass- und -auslassseitigen Abschnitten 7, 9 ist jeweils wenigstens ein Sensor 13 angeordnet, welche mit einer nicht dargestellten Messeinheit datentechnisch verbunden sind. Die Sensoren 13 dienen der Erfassung von Keimkonzentrationen, insbesondere Virus- und oder Bakterienkonzentrationen. Der In Abschnitt 7 angeordnete Sensor 13 dient der Messung der Keimkonzentration vor der Behandlung mit UV-C Strahlung. Der in Abschnitt 9 angeordnete Sensor 13 dient der Erfassung der Keimkonzentration nach der Behandlung mit UV-C Strahlung.

Die Sensoren 13 sowie die Messeinheit sind vorliegend Teil eines nicht dargestellten Regelkreises, welcher steuerungstechnisch mit den LEDs 10 verbunden ist. Dabei kann jede LED 10 einzeln mit dem Regelkreis ansteuerbar verbunden sein. Zusätzlich oder alternativ dazu können mehrere LEDs 10, insbesondere LED-Reihen 11, zur gemeinsamen Ansteuerung mit dem Regelkreis steuerungstechnisch verbunden sein. Hierdurch ist es in einem, vorzugsweise automatisierten, Verfahren mittels einer Regelschleife möglich, die Leistung wenigstens einer LED 10, vorzugsweise einer Mehrzahl, weiter bevorzugt aller LEDs 10, in Abhängigkeit der sensorisch erfassten Messwerte an die aktuelle Keimkonzentration anzupassen. Hierbei werden die IST-Werte der Anfangs- und Restkonzentration mit im Regelkreis abrufbar hinterlegten SOLL-Werten verglichen und die Leistung der LEDs 10 bei Unter- bzw. Überschreiten der Sollwerte entsprechend angesteuert.

Es ist dabei nicht zwingend erforderlich, dass die Sensoren 13, die Messeinheit und/oder der Regelkreis im Gehäuse 2 angeordnet sind. Vielmehr können die dem mittleren Abschnitt 8 strömungstechnisch vor- und nachgeschalteten Abschnitte 7 und 9 vom Belüftungssystem bereitgestellt werden, wobei die Sensoren 13, die Messeinheit und/oder der Regelkreis wenigstens teilweise außerhalb des Gehäuses 2 angeordnet sind. In diesem Fall ist es bevorzugt, dass der Strömungskanal 4 lediglich einen Abschnitt aufweist, in welchem die LEDs 10 angeordnet sind.

Figur 2 zeigt einen Ausschnitt des Gehäuses 2 einer erfindungsgemäßen Vorrichtung 1 mit Fokus auf einer besonderen Ausgestaltung der Anordnung der UV-C-LEDs 10 im Gehäuse.

Abgebildet ist eine Seitenwand 3 des Gehäuses 2. Die Seitenwand 3 weist eine die Seitenwand 3 vollständig durchgreifende Ausnehmung 14 auf.

In die Ausnehmung 14 eingesetzt ist ein Plattenelement 15. Das Plattenelement 15 ist vorliegend vom Kühlkörper 12 bereitgestellt. Die LEDs 10 sind dabei in Form einer LED-Reihe 11 unmittelbar am Plattenelement 15 angeordnet. Die vorliegend als SMD-Chips ausgebildeten LEDs 10 sind über Ihre Platine mit dem Plattenelement 15 verbunden. Das Plattenelement 15 nimmt damit eine Mehrzahl von UV-C-LEDs auf.

Das Plattenelement 15 schließt vorzugsweise bündig und gasdicht mit der Innenseite 16 der Seitenwand 3 ab. Die LEDs 10 sind dabei mit ihrer nicht dargestellten Linse dem Inneren des Gehäuses 2 und damit dem Strömungskanal 4 zugewandt. Zur Verbindung des Kühlkörpers 12 mit der Seitenwand 3 stellt die Seitenwand 3 und/oder der Kühlkörper 12 Löcher 17, insbesondere Bohrungen, bereit, welche mit Verbindungsmitteln, insbesondere Schrauben oder Bolzen, zusammenwirken.

Der Kühlkörper 12 ist vorliegend als Strangpressprofil ausgebildet. Als Material ist Aluminium oder eine Aluminium-Legierung bevorzugt. Der Kühlkörper 12 stellt einen außenseitig des Gehäuses 2 angeordneten Wärmeübertragungsabschnitt 18 bereit. Der Wärmeübertragungsabschnitt 18 stellt eine vergleichsweise große Oberfläche bereit, welche zum Zwecke der Wärmeübertragung mit der Umgebungsluft zusammenwirkt. Alternativ oder bevorzugt stellt die Vorrichtung 1 ein nicht dargestelltes Kühlmittelsystem bereit. Dabei wird der Wärmeübertragungsabschnitt 18 des Kühlkörpers 12 von einem Kühlmedium, insbesondere Wasser, umströmt. Das Kühlsystem stellt hierzu mittels Rohren einen Strömungsweg für das Kühlmittel bereit. Hierdurch wird die von den LEDs 10 erzeugte Wärme in besonders effizienter Weise abgeführt, was insgesamt zu einer Kühlung und einer daraus resultierenden Leistungssteigerung der LEDs führt.

### Bezugszeichenliste

- 1: Vorrichtung
- 2: Gehäuse
- 3: Seitenwand
- 4: Strömungskanal
- 5: Strömungseinlass
- 6: Strömungsauslass
- 7: Abschnitt
- 8: Abschnitt
- 9: Abschnitt
- 10: UV-C-LED
- 11: LED-Reihe
- 12: Kühlkörper
- 13: Sensor
- 14: Ausnehmung
- 15: Plattenelement
- 16: Innenseite
- 17: Loch
- 18: Wärmeübertragungsabschnitt

## Patentansprüche

1. Vorrichtung zur Luftentkeimung mittels UV-C Strahlung für die Anordnung in einem Belüftungssystem, insbesondere eines Gebäudes oder eines Fahrzeugs, aufweisend ein Gehäuse mit einem Strömungseinlass, einem Strömungsauslass sowie einem zwischen Strömungseinlass und -auslass verlaufenden Strömungskanal für die zu entkeimende Luft, und aufweisend wenigstens eine UV-C-LED.

2. Vorrichtung nach Anspruch 1, **dadurch gekennzeichnet, dass** die LED eine Linse aufweist, welche in Richtung des Strömungskanals ausgerichtet ist, wobei sie eine zusätzliche Einfräsung zur Bündelung der emittierten Strahlung aufweist.

3. Vorrichtung nach einem der Ansprüche 1 oder 2, **dadurch gekennzeichnet, dass** die wenigstens eine LED in Chipbauweise ausgebildet ist und über eine Platine verfügt.

4. Vorrichtung nach Anspruch 3, **dadurch gekennzeichnet, dass** die LED über ihre Platine an einer Seitenwand des Gehäuses angeordnet ist.

5. Vorrichtung nach einem der Ansprüche 3 oder 4, **dadurch gekennzeichnet, dass** die Platine mit einem Kühlkörper ausgerüstet ist, welcher zwischen der Seitenwand des Gehäuses und der gehäuseseitigen Oberfläche der Platine angeordnet ist.

6. Vorrichtung nach einem der Ansprüche 1 bis 5, **dadurch gekennzeichnet, dass** das Gehäuse eine Breite, Höhe und/oder Länge von 30 cm bis 200 cm aufweist.

7. Vorrichtung nach einem der Ansprüche 1 bis 6, **gekennzeichnet durch** eine Messeinheit zur Messung einer Keimkonzentration.

8. Vorrichtung nach einem der Ansprüche 1 bis 7, **dadurch gekennzeichnet, dass** das Gehäuse lufteinlassseitig und/oder luftauslassseitig Verbindungselemente, insbesondere in Form von Mitteln zur Verrastung und/oder Verschraubung, aufweist, die der strömungstechnischen Verbindung mit dem Lüftungssystem dienen.

9. System aufweisend ein Belüftungssystem, insbesondere eines Gebäudes oder eines Fahrzeugs, und eine mit dem Belüftungssystem strömungstechnisch verbundene Vorrichtung zur Luftentkeimung gemäß einem der Ansprüche 1 bis 8.

10. Verfahren zur Luftentkeimung mittels UV-C Strahlung in einem Belüftungssystem, insbesondere eines Gebäudes, bei dem innerhalb des Belüftungssystems strömende Luft durch eine mit dem Belüftungssystem strömungstechnisch verbundene Vorrichtung zur Luftentkeimung gemäß einem der Ansprüche 1 bis 8 geleitet wird, wobei die Luft in der Vorrichtung während der Durchströmung zumindest zeitweise mit UV-C Strahlung bestrahlt wird, welche von der wenigstens einen UV-C-LED emittiert wird.
